# EUROPEAN PATENT SPECIFICATION

(11) **EP 3 333 472 B1**
(45) Date of publication and mention of the grant of the patent: **24.07.2019**
(21) Application number: 16203464.9
(22) Date of filing: 12.12.2016
(51) Int. Cl.: F16L 55/04

(54) **A PULSATION DAMPER DEVICE AND A METHOD FOR PULSATION DAMPING OF A PULSATION DAMPER DEVICE**
PULSATIONSDÄMPFERVORRICHTUNG UND VERFAHREN ZUR PULSATIONSDÄMPFUNG EINER PULSATIONSDÄMPFERVORRICHTUNG
DISPOSITIF AMORTISSEUR DE PULSATION ET PROCÉDÉ PERMETTANT D'AMORTIR LES PULSATIONS D'UN DISPOSITIF AMORTISSEUR DE PULSATION

(43) Date of publication of application: 13.06.2018
(73) Proprietor: Tetra Laval Holdings & Finance S.A., 1009 Pully (CH)
(72) Inventor: SKOGLUND, Tomas, 22654 Lund (SE)
(74) Representative: Tetra Pak - Patent Attorneys SE

(56) References cited:
- US-A1- 2010 154 910

## Description

### Technical field

The present invention relates to a pulsation damper device and a method for pulsation damping of a pulsation damper device.

### Background of the invention

Today it is well known to use homogenizers within the food processing industry. For instance, within the dairy industry, homogenizers are used for dividing fat globules into minor parts in order to obtain a stable fat emulsion against gravity separation. In other words, by homogenizing milk one can avoid that a cream layer is formed on top of the milk product. Other reasons for homogenizing food products are to achieve a more appetizing colour, reduced sensitivity of fat oxidation, more full bodied flavor, improved mouthfeel and better stability of cultured milk products.

Generally, a homogenizer can be divided in two main parts, a high pressure pump forming a high pressure and a homogenizing device providing a gap through which the product is forced. Most often the high pressure pump is a piston pump with three to five pistons. These high pressure piston pumps will generate pressure peaks in the pipe systems of the homogenizers.

Large food processing machines are often continuously run for long time periods in order to optimize the use of the machines. However, they regularly have to be cleaned to meet food safety standards and to avoid any unwanted bacteria growth in the parts of the processing machine that are in contact with the food product that is processed. For that purpose, the production is regularly stopped so that all of the parts in the machine may be cleaned. In many machines the cleaning of machine parts is made on site, without the need to dissemble the machine. This is called Cleaning In Place, or CIP.

It is well known that the pressure peaks created in a pipe system due to flow variations increase with increasing velocity (velocity changes) in homogenizers. An increased cross sectional area of the pipes will reduce the pressure peaks. However, if the cross sectional area is increased, then during CIP the velocity will be too low for a good cleaning result.

There is thus a need for improving the state of the art and to reduce the pressure peaks in the pipe system while maintaining the possibility to use CIP. Document US2010/0154910 discloses a dampener apparatus with a particular arrangement of conduits and valves.

### Summary of the invention

It is an object of the present invention to mitigate, alleviate or eliminate one or more of the above-identified deficiencies in the art and disadvantages singly or in any combination and solve at least the above mentioned problem.

According to a first aspect, these and other objects are achieved in full, or at least in part, by a pulsation damper device. The device comprises a main inlet for receiving a fluid flow, and a main outlet for outputting the fluid low. The device further comprises a first flow channel, and a second flow channel arranged in parallel with the first flow channel. The first flow channel and the second flow channel extend between the inlet and the outlet. A first valve is arranged in or in connection with the first flow channel, and a second valve is arranged in or in connection with the second flow channel. The pulsation damper device has a production mode in which both the first valve and the second valve are open, and a cleaning mode in which one of the first valve and the second valve are closed.

In the production mode, both of the flow channels of the pulsation damper device are open and thus the overall cross-sectional fluid area through the device is at its maximum in order to neutralize any potential pressure peaks created due to flow variations. When the flow channels are to be cleaned, the pulsation damper device is put into the cleaning mode. Here, one of the first and the second valves are closed at the time so that the fluid flow is forced through one flow channel at the time, thereby decreasing the overall cross-sectional fluid area through the device. As a consequence, the fluid velocity through the device is increased so that a good cleaning result of the flow channels is possible.

The pulsation damper device is specifically advantageous in that the solution is rather inexpensive and safe when compared with traditional air cushion dampers.

According to a second aspect of the invention, the objects are achieved in full, or at least in part, by a pulsation damper device. The pulsation damper device comprises a main inlet for receiving a fluid flow, and a main outlet for outputting the fluid flow. The pulsation damper device further comprises an inlet channel connected to the main inlet, an outlet channel connected to the main outlet, and a first flow channel, a second flow channel, and a third flow channel. The flow channels are arranged in parallel and each flow channel has an inlet connection at the inlet channel and an outlet connected at the outlet channel. A first valve arranged in the inlet channel between the inlet of the first flow channel and inlet of the second flow channel, and a second valve is arranged in the outlet channel between the outlet of the second flow channel and outlet of the third flow channel. The main inlet is connected to the inlet channel adjacent to the inlet of the first flow channel, and the main outlet is connected to the outlet channel adjacent of the third flow channel. The pulsation damper device has a production mode in which both the first valve and the second valve are open, and a cleaning mode in which both the first valve and the second valve are closed.

In the production mode, all of the flow channels of the pulsation damper device are open and thus the overall cross-sectional fluid area through the device is at its maximum in order to neutralize any potential pressure peaks created due to flow variations. When the flow channels are to be cleaned, the pulsation damper device is put into the cleaning mode. Here, both the first valve and the second valve are closed so that the fluid flow is forced through one flow channel at the time, thereby decreasing the overall cross-sectional fluid area through the device. As a consequence, the fluid velocity through the device is increased so that a good cleaning result of the flow channels is possible.

In one preferred embodiment, each one of the flow channels has substantially the same cross-sectional area.

In another preferred embodiment, the pulsation damper device further comprises a fourth flow channel, and a fifth flow channel, wherein all of the flow channels are arranged in parallel and each flow channel has an inlet connection at said inlet channel and an outlet connected at the outlet channel. A third valve is arranged in the inlet channel between the inlet of the third flow channel and inlet of the fourth flow channel, and a fourth valve is arranged in the outlet channel between the outlet of the fourth flow channel and outlet of the fifth flow channel. The main inlet is connected to the inlet channel adjacent to the inlet of the first flow channel, and the main outlet is connected to the outlet channel adjacent of the fifth flow channel. Naturally, this design may be repeated as many times as needed until the pulsation damper device has the suitable size for the pipe system to which it is to be mounted.

According to a third aspect of the invention, the objects are achieved in full, or at least in part, by a pulsation damper device. The pulsation damper device comprises a main inlet for receiving a fluid flow, a main outlet for outputting the fluid flow, an inlet channel connected to the main inlet, and an outlet channel connected to the main outlet. The pulsation damper device further comprises a number of N flow channels, wherein N is larger than 1, arranged in parallel and each flow channel having an inlet connection at the inlet channel and an outlet connected at the outlet channel. Each flow channel except the Nth flow channel comprises a valve. The main inlet is connected to the inlet channel adjacent to the inlet of the first flow channel and the main outlet is connected to the outlet channel adjacent to the outlet of the first flow channel. The pulsation damper device has a production mode in which valves are opened, and a cleaning mode in which all valves are closed.

Effects and features of this third aspect of the present invention are largely analogous to those described above in connection with the first aspect of the inventive concept. Embodiments mentioned in relation to the first and second aspect of the present invention are largely compatible with the third aspect of the invention.

According to a fourth aspect of the invention, the objects are achieved in full, or at least in part, by a method for pulsation damping of a pulsation damper device. The pulsation damper device comprises a main inlet for receiving a fluid flow, a main outlet for outputting the fluid flow, an inlet channel connected to the main inlet, and an outlet channel connected to the main outlet. The pulsation damping device further comprises a first flow channel, a second flow channel, and a third flow channel, the flow channels being arranged in parallel and each flow channel having an inlet connection at the inlet channel and an outlet connected at the outlet channel. A first valve is arranged in the inlet channel between the inlet of the first flow channel and inlet of the second flow channel, and a second valve is arranged in the outlet channel between the outlet of the second flow channel and outlet of the third flow channel. The main inlet is connected to the inlet channel adjacent to the inlet of the first flow channel, and the main outlet is connected to the outlet channel adjacent of the third flow channel. The method comprises the steps of, in a production mode, opening the first valve and the second valve, and in a cleaning mode, closing the first valve and the second valve.

According to a fourth aspect of the invention, the objects are achieved in full, or at least in part, by a method for pulsation damping of a pulsation damper device. The pulsation damper device comprises a main inlet for receiving a fluid flow, a main outlet for outputting the fluid flow, an inlet channel connected to the main inlet, and an outlet channel connected to the main outlet. The pulsation damper device further comprises a number of N flow channels, wherein N is larger than 1, arranged in parallel and each flow channel having an inlet connection at the inlet channel and an outlet connected at the outlet channel. Each flow channel except the Nth flow channel comprises a valve, and the main inlet and the main outlet is connected to the inlet channel adjacent to the inlet of the first flow channel. The method comprises the steps of, in a production mode, opening all of the valves, and in a cleaning mode, closing all of the valves.

Effects and features of the fourth and fifth aspect of the present invention are largely analogous to those described above in connection with the first, second and third aspects of the inventive concept. Embodiments mentioned in relation to the first, second and third aspect of the present invention are largely compatible with the fourth and fifth aspect of the invention.

Generally, all terms used in the claims are to be interpreted according to their ordinary meaning in the technical field, unless explicitly defined otherwise herein. All references to "a/an/the [element, device, component, means, step, etc.]" are to be interpreted openly as referring to at least one instance of the element, device, component, means, step, etc., unless explicitly stated otherwise.

### Brief description of the drawings

The above objects, as well as additional objects, features and advantages of the present invention, will be more fully appreciated by reference to the following illustrative and non-limiting detailed description of preferred embodiments of the present invention, when taken in conjunction with the accompanying drawings, wherein:
Fig. 1a is a schematic view of a pulsation damper device according to a first aspect of the present invention when in a production mode.
Fig. 1b is a schematic view of the pulsation damper device according to a first aspect of the present invention when in a cleaning mode.
Fig. 2a is a schematic view of a pulsation damper device according to a second aspect of the present invention when in a production mode.
Fig. 2b is a schematic view of the pulsation damper device according to a second aspect of the present invention when in a cleaning mode.
Fig. 3 is a schematic view the pulsation damper device according to a further embodiment of the second aspect of the present invention.
Fig. 4a is a schematic view of a pulsation damper device according to a third aspect of the present invention when in a production mode.
Fig. 4b is a schematic view of the pulsation damper device according to a third aspect of the present invention when in a cleaning mode.

### Detailed description of preferred embodiments of the invention

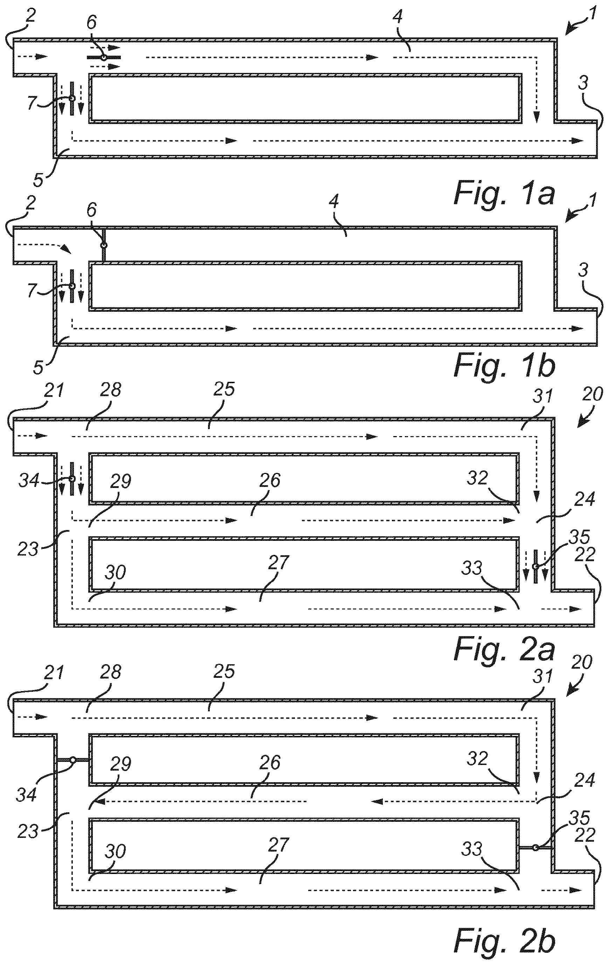

Fig. 1a and 1b illustrate a pulsation damper device 1 according to one examplary embodiment of the invention. The pulsation damper device 1 comprises a main inlet 2 for receiving a fluid flow, a main outlet 3 for outputting said fluid flow, a first flow channel 4, and a second flow channel 5. The first flow channel 4 and the second flow channel 5 are arranged in parallel and extend between the main inlet 2 and the main outlet 3. A first valve 6 is arranged in the first flow channel 4 and a second valve 7 is arranged in the second flow channel 5. The pulsation damper device 1 has a production mode in which both the first valve 6 and the second valve 7 are open, and a cleaning mode in which one of the first valve 6 and the second valve 7 are closed.

In the production mode (Fig. 1a), both of the flow channels 4, 5 of the pulsation damper device 1 are open and thus the overall cross-sectional fluid area through the device 1 is at its maximum. This way, any potential pressure peaks created due to flow variations will be neutralized by means of the device 1. When the flow channels 4, 5 are to be cleaned, the pulsation damper device 1 is put into the cleaning mode (Fig. 1b). Here, one of the first and the second valves 6, 7 are closed at the time so that the fluid flow is forced through one flow channel 4, 5 at the time, thereby decreasing the overall cross-sectional fluid area through the device 1. As a consequence, the fluid velocity through the device 1 is increased so that a good cleaning result of the flow channels 4, 5 will be possible.

Fig. 2a and 2b illustrate the pulsation damper device 20 according to another examplary embodiment of the invention. The pulsation damper device 20 comprises a main inlet 21 for receiving a fluid flow, a main outlet 22 for outputting the fluid flow, an inlet channel 23 connected to the main inlet 21, an outlet channel 24 connected to the main outlet 22, a first flow channel 25, a second flow channel 26, and a third flow channel 27. The flow channels 25, 26, 27 are arranged in parallel and each flow channel 25, 26, 27 has an inlet 28, 29, 30 connected at the inlet channel 23 and an outlet 31, 32, 33 connected at the outlet channel 24. A first valve 34 is arranged in the inlet channel 23 between the inlet 28 of the first flow channel 25 and inlet 29 of the second flow channel 26, and a second valve 35 is arranged in the outlet channel 24 between the outlet 32 of the second flow 26 channel and outlet 33 of the third flow channel 27.

The main inlet 21 is connected to the inlet channel 23 adjacent to the inlet 28 of the first flow channel 25, and main outlet 22 is connected to the outlet channel 24 adjacent of the third flow channel 27.

The pulsation damper device 20 has a production mode in which both of the first valve 34 and the second valve 35 are open, and a cleaning mode in which both of the first valve 34 and the second valve 35 are closed.

In the production mode (Fig. 2a), all of the flow channels 25, 26, 27 of the pulsation damper device 20 are open and thus the overall cross-sectional fluid area through the device 20 is at its maximum. This way, any potential pressure peaks created due to flow variations will be neutralized by means of the device 20. When the flow channels 25, 26, 27 are to be cleaned, the pulsation damper device 20 is put into the cleaning mode (Fig. 2b). Here, both the first valve 34 and the second valve 35 are closed so that the fluid flow is forced through one flow channel 25, 26, 27 at the time, thereby decreasing the overall cross-sectional fluid area through the device 20. As a consequence, the fluid velocity through the device 20 is increased so that a good cleaning result of the flow channels 25, 26, 27 will be possible.

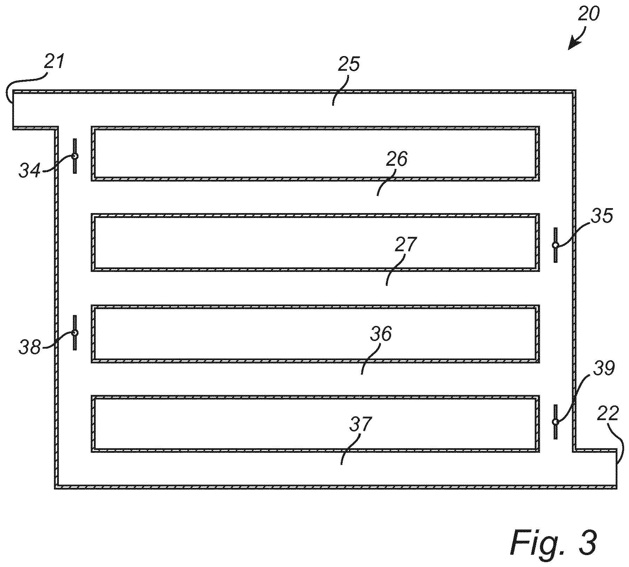

In Fig. 3, the pulsation damper device 20 of Fig. 2a and 2b is illustrated according to an embodiment which contains a fourth flow channel 36 and a fifth flow channel 37. Here, a third valve 38 is arranged in the inlet channel 23 between the inlet of the third flow channel 27 and inlet of the fourth flow channel 36, and a fourth valve 39 is arranged in the outlet channel 24 between the outlet of the fourth flow channel 36 and outlet of the fifth flow channel 37. The main inlet 21 is connected to the inlet channel 23 adjacent to the inlet of the first flow channel 25, and the main outlet 22 is connected to the outlet channel 24 adjacent of the fifth flow channel 37. Other than that, the construction of the pulsation damper device 20 is basically the same. In the production mode, all of the valves 34, 35, 38, 39 are open, and in the cleaning mode, all of the valves 34, 35, 38, 39 are closed.

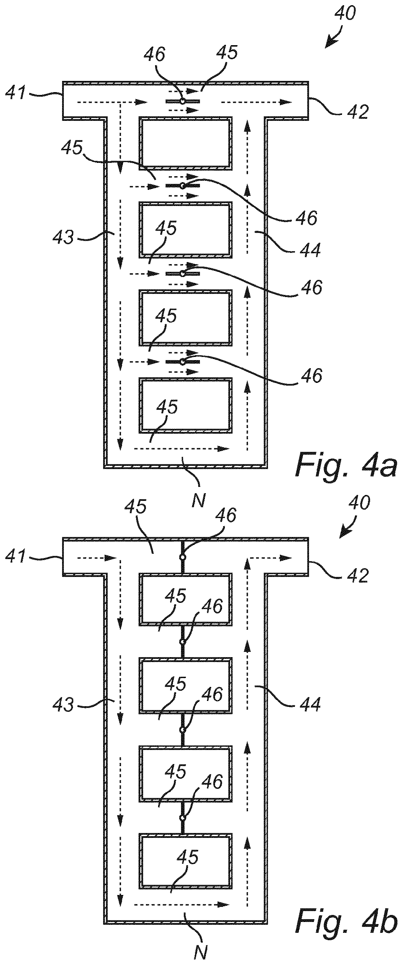

Fig. 4a and 4b illustrate the pulsation damper device 40 according to another examplary embodiment of the invention. The pulsation damper device 40 comprises a main inlet 41 for receiving a fluid flow, a main outlet 42 for outputting the fluid flow, an inlet channel 43 connected to the main inlet 41, and an outlet channel 44 connected to the main outlet 42. The pulsation damper device 40 further comprises a number of N flow channels 45, wherein N is larger than 1. The flow channels 45 are arranged in parallel and each flow channel 45 has an inlet connected at the inlet channel 43 and an outlet connected at the outlet channel 44. Each flow channel 45 except the Nth flow channel comprises a valve 46. The main inlet 41 is connected to the inlet channel 43 adjacent to the inlet of the first flow channel 45 and the main outlet 42 is connected to the outlet channel 44 adjacent to the outlet of the first flow channel 45. The pulsation damper device 40 has a production mode (Fig. 4a) in which valves 46 are opened, and a cleaning mode (Fig. 4b) in which all valves 46 are closed.

The skilled person realizes that a number of modifications of the embodiments described herein are possible without departing from the scope of the invention, which is defined in the appended claims.

The pulsation damper device is normally used in connection with a pipe system of a homogenizing device. However, other implementations are naturally also possible.

The number of flow channels and valves in connection thereto may also be varied in any suitable way.

## Claims

1. A pulsation damper device (1), comprising
a main inlet (2) for receiving a fluid flow, and a main outlet (3) for outputting said fluid flow,
a first flow channel (4), and a second flow channel (5) arranged in parallel with said first flow channel (4), said first flow channel (4) and said second flow channel (5) extending between said main inlet (2) and said main outlet (3),
a first valve (6) arranged in said first flow channel (4), and a second valve (7) arranged in said second flow channel (5),
wherein said pulsation damper device (1) has a production mode in which both said first valve (6) and said second valve (7) are open, and a cleaning mode in which one of said first valve (6) and said second valve (7) are closed.

2. A pulsation damper device (20), comprising
a main inlet (21) for receiving a fluid flow, and a main outlet (22) for outputting said fluid flow,
an inlet channel (23) connected to said main inlet (21), and an outlet channel (24) connected to said main outlet (22),
a first flow channel (25), a second flow channel (26), and a third flow channel (27), said flow channels (25, 26, 27) being arranged in parallel and each flow channel (25, 26, 27) having an inlet (28, 29, 30) connected at said inlet channel (23) and an outlet (31, 32, 33) connected at said outlet channel (24),
a first valve (34) arranged in said inlet channel (23) between said inlet (28) of said first flow channel (25) and inlet (29) of said second flow channel (26), and
a second valve (35) arranged in said outlet channel (24) between said outlet (32) of said second flow channel (26) and outlet (33) of said third flow channel (27),
wherein said main inlet (21) is connected to said inlet channel (23) adjacent to said inlet (28) of said first flow channel (25), and said main outlet (22) is connected to said outlet channel (24) adjacent of said third flow channel (27), and
wherein said pulsation damper device (20) has a production mode in which both said first valve (34) and said second valve (35) are open, and a cleaning mode in which both said first valve (34) and said second valve (35) are closed.

3. The pulsation damper device (1; 20) according to claim 1 or 2, wherein each one of said flow channels (4, 5; 25, 26, 27) has substantially the same cross-sectional area.

4. The pulsation damper device (20) according to claim 2 or 3, further comprising
a fourth flow channel (36), and a fifth flow channel (37), wherein all of said flow channels (25, 26, 27, 36, 37) are arranged in parallel and each flow channel (25, 26, 27, 36, 37) has an inlet connected at said inlet channel (23) and an outlet connected at said outlet channel (24),
a third valve (38) arranged in said inlet channel (23) between said inlet of said third flow channel (27) and inlet of said fourth flow channel (36), and
a fourth valve (39) arranged in said outlet channel (24) between said outlet of said fourth flow channel (36) and outlet of said fifth flow channel (37),
wherein said main inlet (21) is connected to said inlet channel (23) adjacent to said inlet of said first flow channel (25), and said main outlet (22) is connected to said outlet channel (24) adjacent of said fifth flow channel (37), and
wherein said pulsation damper device (20) has a production mode in which all of the valves (34, 35, 38, 39) are open, and a cleaning mode in which all of the valves (34, 35, 38, 39) are closed.

5. A pulsation damper device (40), comprising
a main inlet (41) for receiving a fluid flow, and a main outlet (42) for outputting said fluid flow,
an inlet channel (43) connected to said main inlet (41), and an outlet channel (44) connected to said main outlet (42),
a number of N flow channels (45), wherein N is larger than 1, arranged in parallel and each flow channel (45) having an inlet connected at said inlet channel (43) and an outlet connected at said outlet channel (44),
wherein each flow channel (45) except the Nth flow channel (45) comprises a valve (46),
wherein said main inlet (41) and is connected to said inlet channel (43) adjacent to said inlet of said first flow channel (45) and said main outlet (42) is connected to said outlet channel (44) adjacent to said outlet of said first flow channel (45), and
wherein said pulsation damper device (40) has a production mode in which valves (46) are opened, and a cleaning mode in which all valves (46) are closed.

6. A method for pulsation damping of a pulsation damper device (20), comprising
a main inlet (21) for receiving a fluid flow, and a main outlet (22) for outputting said fluid flow,
an inlet channel (23) connected to said main inlet (21), and an outlet channel (24) connected to said main outlet (22),
a first flow channel (25), a second flow channel (26), and a third flow channel (27), said flow channels (25, 26, 27) being arranged in parallel and each flow channel (25, 26, 27) having an inlet connected at said inlet channel (23) and an outlet connected at said outlet channel (24),
a first valve (34) arranged in said inlet channel (23) between said inlet of said first flow channel (25) and inlet of said second flow channel (26), and
a second valve (35) arranged in said outlet channel (24) between said outlet of said second flow channel (26) and outlet of said third flow channel (27),
wherein said main inlet (21) is connected to said inlet channel (23) adjacent to said inlet of said first flow channel (25), and said main outlet (22) is connected to said outlet channel (24) adjacent of said third flow channel (27), and
wherein said method comprises the step of:
in a production mode, opening said first valve (34) and said second valve (35), and
in a cleaning mode, closing said first valve (34) and said second valve (35).

7. A method for pulsation damping of a pulsation damper device (40), comprising
a main inlet (41) for receiving a fluid flow, and a main outlet (42) for outputting said fluid flow,
an inlet channel (43) connected to said main inlet (41), and an outlet channel (44) connected to said main outlet (42),
a number of N flow channels (45), wherein N is larger than 1, arranged in parallel and each flow channel (45) having an inlet connected at said inlet channel (43) and an outlet connected at said outlet channel (44),
wherein each flow channel (45) except the Nth flow channel (45) comprises a valve (46),
wherein said main inlet (41) and said main outlet (42) is connected to said inlet channel (43) adjacent to said inlet of said first flow channel (45), and
wherein said method comprises the step of:
in a production mode, opening all of the valves (46), and
in a cleaning mode, closing all of the valves (46).

## Patentansprüche

1. Pulsationsdämpfervorrichtung (1), umfassend
einen Haupteinlass (2) zum Aufnehmen eines Fluidstroms und einen Hauptauslass (3) zum Ausgeben des Fluidstroms,
einen ersten Strömungskanal (4) und einen zweiten Strömungskanal (5), der parallel zu dem ersten Strömungskanal (4) angeordnet ist, wobei sich der erste Strömungskanal (4) und der zweite Strömungskanal (5) zwischen dem Haupteinlass (2) und dem Hauptauslass (3) erstrecken,
ein erstes Ventil (6), das in dem ersten Strömungskanal (4) angeordnet ist, und ein zweites Ventil (7), das in dem zweiten Strömungskanal (5) angeordnet ist,
wobei die Pulsationsdämpfervorrichtung (1) eine Produktionsbetriebsart, in der sowohl das erste Ventil (6) als auch das zweite Ventil (7) geöffnet sind, und eine Reinigungsbetriebsart, in der eines von dem ersten Ventil (6) und dem zweiten Ventil (7) geschlossen ist, aufweist.

2. Pulsationsdämpfervorrichtung (20), umfassend
einen Haupteinlass (21) zum Aufnehmen eines Fluidstroms und einen Hauptauslass (22) zum Ausgeben des Fluidstroms,
einen Einlasskanal (23), der mit dem Haupteinlass (21) verbunden ist, und einen Auslasskanal (24), der mit dem Hauptauslass (22) verbunden ist,
einen ersten Strömungskanal (25), einen zweiten Strömungskanal (26) und einen dritten Strömungskanal (27), wobei die Strömungskanäle (25, 26, 27) parallel angeordnet sind und jeder Strömungskanal (25, 26, 27) einen Einlass (28, 29, 30), der mit dem Einlasskanal (23) verbunden ist, und einen Auslass (31, 32, 33), der mit dem Auslasskanal (24) verbunden ist, aufweist,
ein erstes Ventil (34), das in dem Einlasskanal (23) zwischen dem Einlass (28) des ersten Strömungskanals (25) und dem Einlass (29) des zweiten Strömungskanals (26) angeordnet ist, und
ein zweites Ventil (35), das in dem Auslasskanal (24) zwischen dem Auslass (32) des zweiten Strömungskanals (26) und dem Auslass (33) des dritten Strömungskanals (27) angeordnet ist,
wobei der Haupteinlass (21) mit dem Einlasskanal (23) angrenzend an den Einlass (28) des ersten Strömungskanals (25) verbunden ist und der Hauptauslass (22) mit dem Auslasskanal (24) angrenzend an den dritten Strömungskanal (27) verbunden ist, und
wobei die Pulsationsdämpfervorrichtung (20) eine Produktionsbetriebsart, in der sowohl das erste Ventil (34) als auch das zweite Ventil (35) geöffnet sind, und eine Reinigungsbetriebsart, in der sowohl das erste Ventil (34) als auch das zweite Ventil (35) geschlossen sind, aufweist.

3. Pulsationsdämpfervorrichtung (1; 20) nach Anspruch 1 oder 2, wobei jeder der Strömungskanäle (4, 5; 25, 26, 27) im Wesentlichen denselben Querschnittsbereich aufweist.

4. Pulsationsdämpfervorrichtung (20) nach Anspruch 2 oder 3, ferner umfassend
einen vierten Strömungskanal (36) und einen fünften Strömungskanal (37), wobei alle Strömungskanäle (25, 26, 27, 36, 37) parallel angeordnet sind und jeder Strömungskanal (25, 26, 27, 36, 37) einen Einlass, der mit dem Einlasskanal (23) verbunden ist, und einen Auslass, der mit dem Auslasskanal (24) verbunden ist, aufweist,
ein drittes Ventil (38), das in dem Einlasskanal (23) zwischen dem Einlass des dritten Strömungskanals (27) und dem Einlass des vierten Strömungskanals (36) angeordnet ist, und
ein viertes Ventil (39), das in dem Auslasskanal (24) zwischen dem Auslass des vierten Strömungskanals (36) und dem Auslass des fünften Strömungskanals (37) angeordnet ist,
wobei der Haupteinlass (21) mit dem Einlasskanal (23) angrenzend an den Einlass des ersten Strömungskanals (25) verbunden ist und der Hauptauslass (22) mit dem Auslasskanal (24) angrenzend an den fünften Strömungskanal (37) verbunden ist, und
wobei die Pulsationsdämpfervorrichtung (20) eine Produktionsbetriebsart, in der alle Ventile (34, 35, 38, 39) geöffnet sind, und eine Reinigungsbetriebsart, in der alle Ventile (34, 35, 38, 39) geschlossen sind, aufweist.

5. Pulsationsdämpfervorrichtung (40), umfassend
einen Haupteinlass (41) zum Aufnehmen eines Fluidstroms und einen Hauptauslass (42) zum Ausgeben des Fluidstroms,
einen Einlasskanal (43), der mit dem Haupteinlass (41) verbunden ist, und einen Auslasskanal (44), der mit dem Hauptauslass (42) verbunden ist,
eine Anzahl N von Strömungskanälen (45), wobei N größer als 1 ist, die parallel angeordnet sind, und wobei jeder Strömungskanal (45) einen Einlass, der mit dem Einlasskanal (43) verbunden ist, und einen Auslass, der mit dem Auslasskanal (44) verbunden ist, aufweist,
wobei jeder Strömungskanal (45) außer dem N-ten Strömungskanal (45) ein Ventil (46) umfasst,
wobei der Haupteinlass (41) mit dem Einlasskanal (43) angrenzend an den Einlass des ersten Strömungskanals (45) verbunden ist und der Hauptauslass (42) mit dem Auslasskanal (44) angrenzend an den Auslass des ersten Strömungskanals (45) verbunden ist, und
wobei die Pulsationsdämpfervorrichtung (40) eine Produktionsbetriebsart, in der Ventile (46) geöffnet sind, und eine Reinigungsbetriebsart, in der alle Ventile (46) geschlossen sind, aufweist.

6. Verfahren für eine Pulsationsdämpfung einer Pulsationsdämpfervorrichtung (20), umfassend
einen Haupteinlass (21) zum Aufnehmen eines Fluidstroms und einen Hauptauslass (22) zum Ausgeben des Fluidstroms,
einen Einlasskanal (23), der mit dem Haupteinlass (21) verbunden ist, und einen Auslasskanal (24), der mit dem Hauptauslass (22) verbunden ist,
einen ersten Strömungskanal (25), einen zweiten Strömungskanal (26) und einen dritten Strömungskanal (27), wobei die Strömungskanäle (25, 26, 27) parallel angeordnet sind und jeder Strömungskanal (25, 26, 27) einen Einlass, der mit dem Einlasskanal (23) verbunden ist, und einen Auslass, der mit dem Auslasskanal (24) verbunden ist, aufweist,
ein erstes Ventil (34), das in dem Einlasskanal (23) zwischen dem Einlass des ersten Strömungskanals (25) und dem Einlass des zweiten Strömungskanals (26) angeordnet ist, und
ein zweites Ventil (35), das in dem Auslasskanal (24) zwischen dem Auslass des zweiten Strömungskanals (26) und dem Auslass des dritten Strömungskanals (27) angeordnet ist,
wobei der Haupteinlass (21) mit dem Einlasskanal (23) angrenzend an den Einlass des ersten Strömungskanals (25) verbunden ist und der Hauptauslass (22) mit dem Auslasskanal (24) angrenzend an den dritten Strömungskanals (27) verbunden ist, und
wobei das Verfahren den folgenden Schritt umfasst:
in einer Produktionsbetriebsart, Öffnen des ersten Ventils (34) und des zweiten Ventils (35), und
in einer Reinigungsbetriebsart, Schließen des ersten Ventils (34) und des zweiten Ventils (35) .

7. Verfahren für eine Pulsationsdämpfung einer Pulsationsdämpfervorrichtung (40), umfassend
einen Haupteinlass (41) zum Aufnehmen eines Fluidstroms und einen Hauptauslass (42) zum Ausgeben des Fluidstroms,
einen Einlasskanal (43), der mit dem Haupteinlass (41) verbunden ist, und einen Auslasskanal (44), der mit dem Hauptauslass (42) verbunden ist,
eine Anzahl N von Strömungskanälen (45), wobei N größer als 1 ist, die parallel angeordnet sind, und wobei jeder Strömungskanal (45) einen Einlass, der mit dem Einlasskanal (43) verbunden ist, und einen Auslass, der mit dem Auslasskanal (44) verbunden ist, aufweist,
wobei jeder Strömungskanal (45) außer dem N-ten Strömungskanal (45) ein Ventil (46) aufweist,
wobei der Haupteinlass (41) und der Hauptauslass (42) mit dem Einlasskanal (43) angrenzend an den Einlass des ersten Strömungskanals (45) verbunden sind, und
wobei das Verfahren den folgenden Schritt umfasst:
in einer Produktionsbetriebsart, Öffnen aller Ventile (46), und
in einer Reinigungsbetriebsart, Schließen aller Ventile (46).

## Revendications

1. Dispositif amortisseur de pulsation (1), comprenant :
une entrée principale (2) pour recevoir un écoulement de fluide, et une sortie principale (3) pour évacuer ledit écoulement de fluide ;
un premier canal d'écoulement (4) et un second canal d'écoulement (5) agencé parallèlement audit premier canal d'écoulement (4), ledit premier canal d'écoulement (4) et ledit second canal d'écoulement (5) s'étendant entre ladite entrée principale (2) et ladite sortie principale (3) ;
une première vanne (6) agencée dans ledit premier canal d'écoulement (4) et une seconde vanne (7) agencée dans ledit second canal d'écoulement (5),
ledit dispositif amortisseur de pulsation (1) ayant un mode de production dans lequel ladite première vanne (6) et ladite seconde vanne (7) sont ouvertes, et un mode de nettoyage dans lequel une desdites première vanne (6) et seconde vanne (7) est fermée.

2. Dispositif amortisseur de pulsation (20), comprenant :
une entrée principale (21) pour recevoir un écoulement de fluide, et une sortie principale (22) pour évacuer ledit écoulement de fluide ;
un canal d'entrée (23) connecté à ladite entrée principale (21), et un canal de sortie (24) connecté à ladite sortie principale (22) ;
un premier canal d'écoulement (25), un deuxième canal d'écoulement (26) et un troisième canal d'écoulement (27), lesdits canaux d'écoulement (25, 26, 27) étant agencés parallèlement, et chaque canal d'écoulement (25, 26, 27) ayant une entrée (28, 29, 30) connectée audit canal d'entrée (23) et une sortie (31, 32, 33) connectée audit canal de sortie (24) ;
une première vanne (34) agencée dans ledit canal d'entrée (23) entre ladite entrée (28) dudit premier canal d'écoulement (25) et ladite entrée (29) dudit deuxième canal d'écoulement (26) ; et
une deuxième vanne (35) agencée dans ledit canal de sortie (24) entre ladite sortie (32) dudit deuxième canal d'écoulement (26) et ladite sortie (33) dudit troisième canal d'écoulement (27),
ladite entrée principale (21) étant connectée audit canal d'entrée (23) à proximité de ladite entrée (28) dudit premier canal d'écoulement (25), et ladite sortie principale (22) étant connectée audit canal de sortie (24) à proximité dudit troisième canal d'écoulement (27), et
ledit dispositif amortisseur de pulsation (20) ayant un mode de production dans lequel ladite première vanne (34) et ladite deuxième vanne (35) sont ouvertes, et un mode de nettoyage dans lequel ladite première vanne (34) et ladite deuxième vanne (35) sont fermées.

3. Dispositif amortisseur de pulsation (1 ; 20) selon la revendication 1 ou 2, dans lequel chacun desdits canaux d'écoulement (4, 5 ; 25, 26, 27) a sensiblement la même section transversale.

4. Dispositif amortisseur de pulsation (20) selon la revendication 2 ou 3, comprenant en outre :
un quatrième canal d'écoulement (36) et un cinquième canal d'écoulement (37), lesdits canaux d'écoulement (25, 26, 27, 36, 37) étant tous agencés parallèlement, et chaque canal d'écoulement (25, 26, 27, 36, 37) ayant une entrée connectée audit canal d'entrée (23) et une sortie connectée audit canal de sortie (24) ;
une troisième vanne (38) agencée dans ledit canal d'entrée (23) entre ladite entrée dudit troisième canal d'écoulement (27) et ladite entrée dudit quatrième canal d'écoulement (36) ; et
une quatrième vanne (39) agencée dans ledit canal de sortie (24) entre ladite sortie dudit quatrième canal d'écoulement (36) et ladite sortie dudit cinquième canal d'écoulement (37),
ladite entrée principale (21) étant connectée audit canal d'entrée (23) à proximité de ladite entrée dudit premier canal d'écoulement (25), et ladite sortie principale (22) étant connectée audit canal de sortie (24) à proximité dudit cinquième canal d'écoulement (37), et
ledit dispositif amortisseur de pulsation (20) ayant un mode de production dans lequel toutes les vannes (34, 35, 38, 39) sont ouvertes, et un mode de nettoyage dans lequel toutes les vannes (34, 35, 38, 39) sont fermées.

5. Dispositif amortisseur de pulsation (40), comprenant :
une entrée principale (41) pour recevoir un écoulement de fluide, et une sortie principale (42) pour évacuer ledit écoulement de fluide ;
un canal d'entrée (43) connecté à ladite entrée principale (41), et un canal de sortie (44) connecté à ladite sortie principale (42) ;
un nombre N de canaux d'écoulement (45), N étant supérieur à 1, agencés parallèlement, et chaque canal d'écoulement (45) ayant une entrée connectée audit canal d'entrée (43) et une sortie connectée audit canal de sortie (44),
chaque canal d'écoulement (45), à l'exception du Nième canal d'écoulement (45), comprenant une vanne (46),
ladite entrée principale (41) étant connectée audit canal d'entrée (43) à proximité de ladite entrée dudit premier canal d'écoulement (45), et ladite sortie principale (42) étant connectée audit canal de sortie (44) à proximité de ladite sortie dudit premier canal d'écoulement (45), et
ledit dispositif amortisseur de pulsation (40) ayant un mode de production dans lequel les vannes (46) sont ouvertes, et un mode de nettoyage dans lequel toutes les vannes (46) sont fermées.

6. Procédé d'amortissement de pulsation d'un dispositif amortisseur de pulsation (20), comprenant :
une entrée principale (21) pour recevoir un écoulement de fluide, et une sortie principale (22) pour évacuer ledit écoulement de fluide ;
un canal d'entrée (23) connecté à ladite entrée principale (21), et un canal de sortie (24) connecté à ladite sortie principale (22) ;
un premier canal d'écoulement (25), un deuxième canal d'écoulement (26) et un troisième canal d'écoulement (27), lesdits canaux d'écoulement (25, 26, 27) étant agencés parallèlement, et chaque canal d'écoulement (25, 26, 27) ayant une entrée connectée audit canal d'entrée (23) et une sortie connectée audit canal de sortie (24) ;
une première vanne (34) agencée dans ledit canal d'entrée (23) entre ladite entrée dudit premier canal d'écoulement (25) et ladite entrée dudit deuxième canal d'écoulement (26) ; et
une seconde vanne (35) agencée dans ledit canal de sortie (24) entre ladite sortie dudit deuxième canal d'écoulement (26) et ladite sortie dudit troisième canal d'écoulement (27),
ladite entrée principale (21) étant connectée audit canal d'entrée (23) à proximité de ladite entrée dudit premier canal d'écoulement (25), et ladite sortie principale (22) étant connectée audit canal de sortie (24) à proximité dudit troisième canal d'écoulement (27), et
le procédé comprenant les étapes consistant à :
dans un mode de production, ouvrir ladite première vanne (34) et ladite seconde vanne (35) ; et
dans un mode de nettoyage, fermer ladite première vanne (34) et ladite seconde vanne (35).

7. Procédé d'amortissement de pulsation d'un dispositif amortisseur de pulsation (40), comprenant :
une entrée principale (41) pour recevoir un écoulement de fluide, et une sortie principale (42) pour évacuer ledit écoulement de fluide ;
un canal d'entrée (43) connecté à ladite entrée principale (41), et un canal de sortie (44) connecté à ladite sortie principale (42) ;
un nombre N de canaux d'écoulement (45), N étant supérieur à 1, agencés parallèlement, et chaque canal d'écoulement (45) ayant une entrée connectée audit canal d'entrée (43) et une sortie connectée audit canal de sortie (44),
chaque canal d'écoulement (45), à l'exception du Nième canal d'écoulement (45), comprenant une vanne (46),
ladite entrée principale (41) et ladite sortie principale (42) étant connectées audit canal d'entrée (43) à proximité de ladite entrée dudit premier canal d'écoulement (45), et
le procédé comprenant les étapes consistant à :
dans un mode de production, ouvrir toutes les vannes (46) ; et
dans un mode de nettoyage, fermer toutes les vannes (46).
